# EUROPEAN PATENT SPECIFICATION

(11) **EP 3 680 497 B1**
(45) Date of publication and mention of the grant of the patent: **08.12.2021**
(21) Application number: 19150685.6
(22) Date of filing: 08.01.2019
(51) Int. Cl.: F16B 21/00

(54) **ASSEMBLY OF A PROTECTION COVER AND A METALLIC ANCHOR CLAMP**
VORRICHTUNG UMFASSEND EINE SCHUTZABDECKUNG UND EINE METALLISCHE ANKERKLEMME
ASSEMBLAGE COMPRENANT UNE COUVERCLE DE PROTECTION ET UNE PINCE D'ANCRAGE MÉTALLIQUE

(43) Date of publication of application: 15.07.2020
(73) Proprietor: HellermannTyton GmbH, 25436 Tornesch (DE)
(72) Inventor: FULL, Steven, 22846 NORDERSTEDT (DE)
(74) Representative: Manitz Finsterwald Patent- und Rechtsanwaltspartnerschaft mbB

(56) References cited:
- CN-U- 204 983 896
- US-A- 5 395 194

## Description

### TECHNICAL FIELD OF THE INVENTION

The invention relates to an assembly of a protection cover and a metallic anchor clamp. More particularly the invention relates to a removable protection cover for the anchoring hooks of a metallic anchor clamp of a fastening retainer of vehicle cable tie in order to protect vehicle cables against damages causes by the hooks during their delivery to vehicle factories.

### BACKGROUND OF THE INVENTION

In combination with a cable tie, anchor clamp, or a deep hole anchor clamp, is a feature to mount a harness to vehicle parts with casted, drilled, cut or molded holes without thread. It consists on a fastening retainer generally comprising a plastic screw with a cable tie retainer and a metal clamp having anchoring hooks or sharp edged teeth.

The assembly of the metallic anchor clamp with the fastening retainer of a vehicle cable tie requires specific tools to maintain the metallic anchor in a stable position during insertion of the fastening retainer.

Generally, the assembly of the metallic anchor clamp with the fastening retainer of vehicle cable tie is pre-installed on a vehicle harness before harness mounting in the vehicle. In such configuration, anchoring hooks may hurt operator in charge of mounting harness in the vehicle, and in addition, anchoring hooks may damage vehicle cables during transportation of the harness.

It is therefore important to propose a new solution to solve these problems.

### SUMMARY OF THE INVENTION

According to the invention an assembly of a protection cover and a metallic anchor clamp of a fastening retainer of a vehicle cable tie according to claim 1 is provided.

The anchoring hooks guiding means comprise vertical elongated opening jointly arranged with the vertical central hollow body portion and extending from the top extremity of the central hollow body portion to a bottom end such that the anchoring hooks may vertically slide along the outer wall of the central hollow body portion up to their dedicated position inside the lateral body portion.

For avoiding damage of the anchoring hooks, it is preferable to insert and arrange the anchoring hooks free of contact with the protection cover.

The retention means may comprise vertical retention walls of the vertical central hollow body portion configured to provide a retention contact force onto the body of the metallic anchor clamp.

For better sliding insertion, the inner surface of each vertical retention wall comprises at least two distant parallel vertical ribs defining retention surface area of the retention wall between said two vertical ribs.

The retention means and guiding means may be alternatively regularly peripherally arranged around the vertical central hollow body.

The vertical central hollow body may comprise a circumferential cylindrical vertical central blind hole wherein the at least two lateral body portions are circumferentially distributed around the vertical central hollow body portion, and each lateral body portion may also comprise lateral circumferential cylindrical blind hole provided for arranging anchoring hooks of the metallic anchor clamp.

The retention means and guiding means may be alternatively regularly circumferentially arranged around the vertical central hollow body. The retention means may comprise two vertical retention walls circumferentially arranged and separated by 180° while being separated by two vertical elongated openings circumferentially arranged and separated by 180°. The retention means may comprise three vertical retention walls circumferentially arranged and each separated by 120 ° while each vertical retention walls being separated to another vertical retention wall by vertical elongated openings circumferentially arranged and separated by 120° to another vertical elongated openings.

The vertical central hollow body portion may comprise outer gripping means provided for manually holding the protection cover during disassembling of the metallic anchor clamp such that easy disassembly is providing by simply manually maintaining the protection cover while manually extracting the metallic anchor clamp assembled with its fastening retainer of vehicle cable tie. At least one of the lateral body portions may comprise outer gripping means provided for manually holding the protection cover during disassembling of the metallic anchor clamp. Said outer gripping means may comprise at least one horizontal outer edge. More particularly, the outer gripping means may comprise at least one horizontal portion ring extending on the outer surface of the vertical central hollow body portion and joining two consecutive lateral body portions. For weight and cost issue, the protection cover may be made of a one plastic piece.

According to the invention, an assembly of the protection cover described above with a metallic anchor clamp having anchoring hooks peripherally distrusted around the body of the metallic anchor clamp, comprises the body of the metallic anchor clamp arranged compressed by the retention means within the vertical central hollow body portion and the anchoring hooks of the metallic anchor clamp arranged within the lateral body portions, preferably free of contact with the protection cover. The assembly may further comprise a fastening retainer of vehicle cable tie inserted inside the body of the metallic anchor clamp such that said assembly may be attached with a cable tie to vehicle cables with limited risk of damaging the cables and hearting an operator.

### BRIEF DESCRIPTION OF THE DRAWINGS

Other features, objects and advantages of the invention will become apparent from reading the detailed description that follows, and the attached drawing, given by way of example and in which:
- Figure 1 is a schematic perspective exploded view of the assembly of a fastening retainer of vehicle cable tie with a metallic anchor clamp and with a protection cover according to one embodiment.
- Figure 2 is a schematic perspective view of the protection cover according to figure 1.
- Figure 3 is a schematic top view of the protection cover assembled with the metallic anchor clamp according to figure 1.
- Figure 4 is a schematic view of a vertical cut of the protection cover of figure 2.
- Figure 5 is a schematic view of a vertical cut of the protection cover of figure 3.
- Figures 6, 7, 8, 9 and 10 are schematic view of assembly steps of the fastening retainer of vehicle cable tie with the metallic anchor clamp and with the protection cover according to figure 1.
- Figure 11 is a schematic view of a disassembly step of the protection cover to the fastening retainer of vehicle cable tie assembled with the metallic anchor clamp according to figure 1.

### DETAILED DESCRIPTION OF THE PREFFERED EMBODIMENTS

In order to facilitate the description, and in a no limiting manner, a vertical axis V is defined. "Low" and "High", "Above" and "Below", "Lower" and "Higher", "Top" and "Bottom" orientations are defined in the vertical direction.

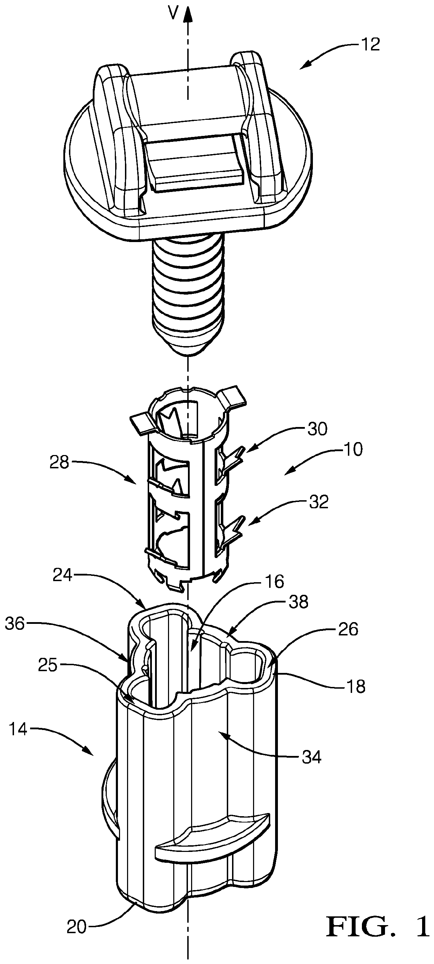

According to figure 1, an exploded view extending along the vertical axis V shows a metallic anchor clamp 10, a fastening retainer 12 of vehicle cable tie, and a protection cover 14. The metallic anchor clamp 10 comprises a cylindrical body part 28 with anchoring hooks 30, 32 circumferentially distributed around the cylindrical body part 28.

Even if the description relates to a removable protection cover 14 for the anchoring hooks 30, 32 of a metallic anchor clamp 10 of a fastening retainer 12 of vehicle cable tie, the invention may be extended to a removable protection cover 14 for the anchoring hooks 30, 32 of a metallic anchor clamp 10 of a fastening retainer 12 of any cable tie.

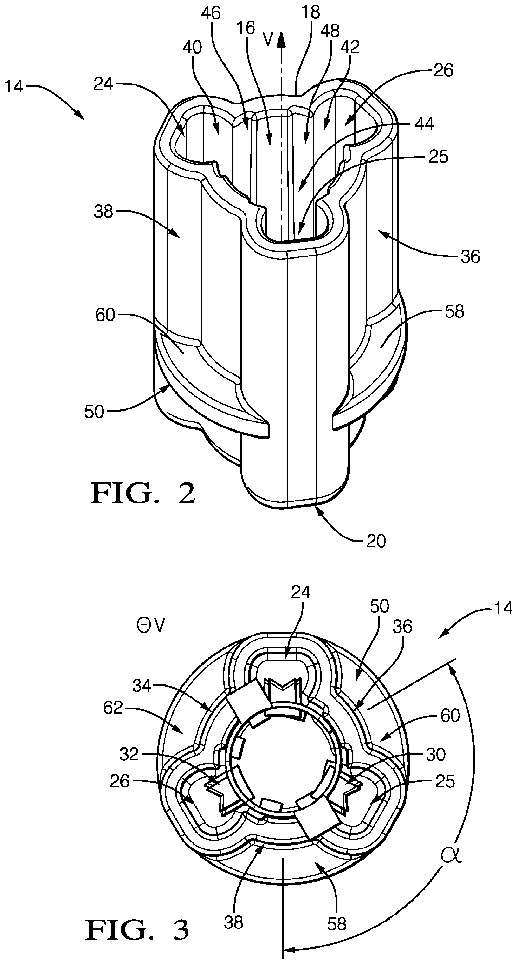

According to figure 1 and figure 2, the protecting cover 14 comprises a vertical central hollow body portion 16 extending along the vertical axis V from a top extremity 18 to a bottom extremity 20, provided for insertion of the body 22 of the metallic anchor clamp 10 along the vertical axis V. The protection cover 14 further comprises lateral hollow body portions 24, 25, 26 peripherally distributed around the vertical central hollow body portion 16 and provided for insertion and arrangement of the anchoring hooks 30, 32 of the metallic anchor clamp 10 inside the lateral hollow body portions 24, 26.

More particularly, the central hollow body portion 16 is formed of a vertical tubular portion comprising a cylindrical vertical body portion split into three vertical walls 34, 36, 38 arranged in a circumferentially manner and spaced apart by three elongated openings 40, 42, 44, each elongated opening 40, 42, 44 extending from the top extremity 18 to a bottom end. Each vertical elongated opening 40, 42, 44, are jointly arranged with the vertical central hollow body portion 16.

According to the particular embodiment of figure 2 and figure 3, the three vertical walls 34, 36, 38 are similar in shape and are regularly circumferentially separated from each other by an angular value α of 120° and alternatively circumferentially arranged with the three elongated openings 40, 42, 44. The three elongated openings 40, 42, 44 are similar in shape and are regularly circumferentially separated from each other by another angular value of 120°.

The three elongated openings 40, 42, 44 are used as guiding means for the anchoring hooks 30, 32 of the metallic anchor clamp 10 during insertion of the metallic anchor clamp 10 inside the central hollow body portion 16.

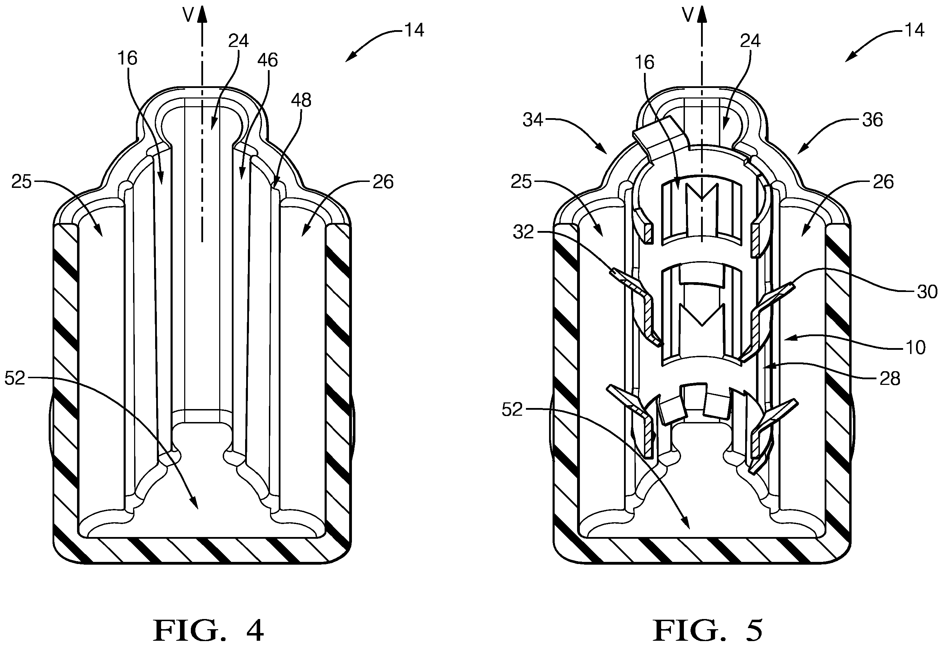

According to figure 4 and figure 5, the central hollow body portion 16 comprises retention means configured to provide a retention force Fr onto the cylindrical body part 28 of the metallic anchor clamp 10. The retention means are formed by the inner surface of the vertical walls 34, 36, 38 of the central body portion 16. The inner diameter of the discontinued virtual circle formed by the top horizontal extremity of the three vertical walls 34, 36, 38 has a dimension not larger than the diameter of the cylindrical body part 28 of the metallic anchor clamp 10 such that the body part 28 of the metallic anchor clamp 10, as a resilient member, is configured to be inserted in friction with the vertical walls, along the inner surface of the vertical walls 34, 36, 38. In other words, the vertical walls 34, 36, 38, made of rigid plastic material, provide a contact force onto the cylindrical body part 28 of the metallic anchor clamp 10, or pressure force, or retention force Fr, such that without external force, the metallic anchor clamp 10 is not movable inside the protection cover 14.

For easiest insertion of the cylindrical body part 28 of the metallic anchor clamp 10, each inner surface of the vertical walls 34, 36, 38 of the vertical central hollow body portion 16, i.e. the surface of the vertical walls 34, 36, 38 applying retention force Fr, comprises two distant parallel vertical ribs 46, 48 defining retention surface area of the vertical retention walls 34, 36, 38 between said two vertical ribs 46, 48. Each vertical rib 46, 48 extends vertically from the top extremity 18 to the bottom extremity 20 of each vertical retention walls3 4, 36, 38 such that the retention surface is optimum.

Generally, the number of vertical retention walls 34, 36, 38 and the number of elongated openings 40, 42, 44 commonly belonging to the lateral hollow body portions 24, 25, 26 and belonging to the vertical central hollow body portion 16, depends on anchoring hooks 30, 32 arrangement of the metallic anchor clamp 10. As another non limited example, the protection cover 14 may comprise two vertical retention walls 34, 36 alternatively circumferentially regularly arranged with two elongated openings 40, 42 of two lateral hollow body portions 25, 26.

As shown on figure 3, figure 4 and figure 5, as a bottom retaining stop, the central hollow body portion comprises a bottom wall 52 such as the central hollow body portion 16 is a vertical circumferential cylindrical central blind hole extending from the top extremity 18 to the bottom extremity 20. During insertion of the cylindrical body part 28 of the metallic anchor clamp 10, the bottom extremity of the metallic anchor clamp 10 abuts onto the bottom retaining stop of the protection cover 14. In addition, each lateral hollow body portion 24, 25, 26 comprises vertical lateral circumferential cylindrical blind hole provided for arranging anchoring hooks 30, 32 of the metallic anchor clamp 10. Each vertical lateral circumferential cylindrical blind hole extends from the top extremity 18 to the bottom extremity 20 such that each vertical lateral circumferential cylindrical blind hole and the vertical circumferential cylindrical central blind hole comprises the unique bottom wall 52 of the protection cover 14.

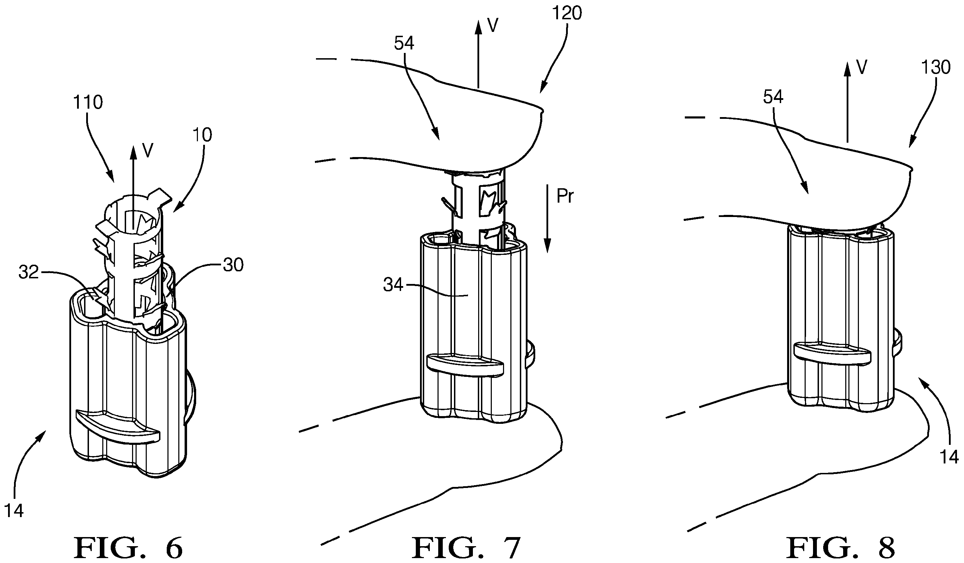

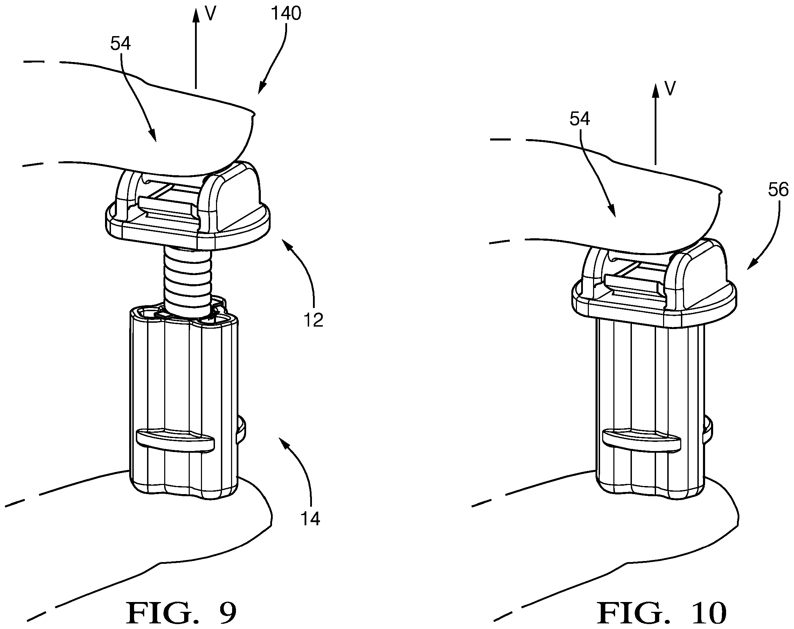

According to figures 6, 7, 8, 9 and 10, a method to assemble the protection cover 14 to the metallic anchor clamp 10, and to the fastening retainer 12 of vehicle cable tie, comprises a first step 110 of positioning the bottom extremity of the cylindrical body part 28 of the metallic anchor clamp 10 on the central hollow body portion 16 of the protection cover 14, and rotationally adjusting the position of the anchor hooks 30, 32 on the lateral hollow body portions 24, 25, 26. A second step 120 comprises providing a manual vertical pressure Pr by a finger 54 of an operator on the top extremity of the cylindrical body part 28 of the metallic anchor clamp 10 for inserting in force the cylindrical body part 28 of the metallic anchor clamp 10 in between the retention walls 34, 36, 38 of the protection cover 14. A third step 130 comprises inserting the cylindrical body part 28 of the metallic anchor clamp 10 up to the retaining stop of the protection cover 14 such that the bottom extremity of the metallic anchor clamp 10 abuts onto the bottom wall 52 of the protection cover 14. During insertion of the metallic anchor clamp 10, each anchoring hook 30, 32 slides along an elongated opening 40, 42, 44 of a lateral hollow body portion 24, 25, 26 free of contact with the cover protection 14 and stay arranged inside the lateral hollow body portion 24, 25, 26 free of contact with the cover protection 14 while the bottom extremity of the metallic anchor clamp 10 abuts onto the bottom wall 52 of the protection cover 14. In addition, when the metallic anchor clamp 10 is totally assembled to the cover protection 14, i.e. while the bottom extremity of the metallic anchor clamp 10 abuts onto the bottom wall 52 of the protection cover 14, a fourth step 140 comprising a vertical manual insertion of the fastening retainer 12 of vehicle cable tie into the metallic anchor clamp 10 is processed by the finger 54 of an operator such that, when the fastening retainer 12 of vehicle cable tie is completely inserted inside the metallic anchor clamp 10 (figure 10), the assembly 56 of the fastening retainer 12 of vehicle cable tie with the metallic anchor clamp 10 and with the protection cover 14, is ready to be attached with cable tie to a vehicle harness.

It has to be noticed that when the fastening retainer 12 of vehicle cable tie is inserted inside the metallic anchor clamp 10, due to geometrical properties of fastening retainer 12 of vehicle cable tie, said fastening retainer 12 of vehicle cable is attached inside the cylindrical body part 28 of the metallic anchor clamp 10. As a non-limited example, the fastening retainer 12 of vehicle cable tie may comprises a main body part forming a plastic screw retainer and a plastic head configured to receive a cable tie. The main body part forming a plastic screw retainer, while inserted inside the body part 28 of the metallic anchor clamp 10, is then attached inside the cylindrical body part 28 of the metallic anchor clamp 10

The assembly 56 of the protection cover 14 with the metallic anchor clamp 10 having anchoring hooks 30, 32 peripherally distributed around the body part 28 of the metallic anchor clamp 10, comprises the body of the metallic anchor clamp 10 arranged compressed by the retention means 34, 36, 38 within the vertical central hollow body portion 16, and comprises the anchoring hooks 30, 32 of the metallic anchor clamp 10 arranged within the lateral body portions 24, 25, 26. In addition, according to the extra operation of the insertion of the fastening retainer 12 of vehicle cable tie inside the metallic anchor clamp 10, the assembly 56 further comprises the fastening retainer of vehicle cable tie 12 inserted inside the body part 28 of the metallic anchor clamp 10.

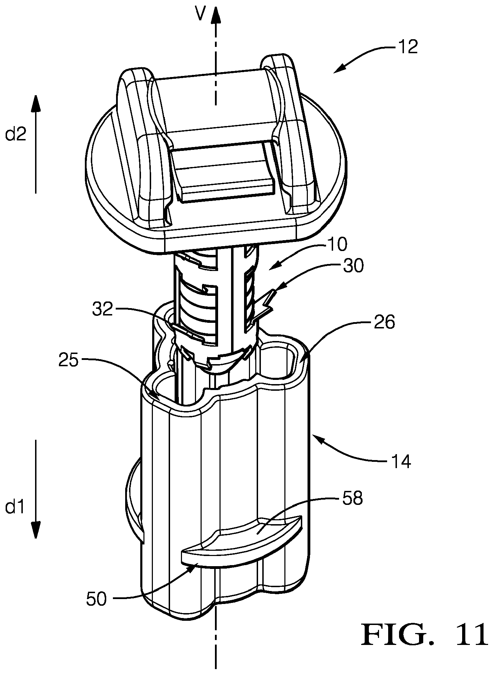

According to figure 31 and figure 11, in order to easily disassemble the protection cover 14 to the metallic anchor clamp 10 assembled with the fastening retainer 12 of vehicle cable tie, while the assembly being attached with cable tie to the vehicle harness, the protection cover 14 comprises outer gripping means 50 provided for manually holding, by the hand of an operator, the protection cover 14 during disassembling of the metallic anchor clamp 10 assembled with the fastening retainer 12 of vehicle cable tie to the protection cover 14. The outer gripping means 50 comprise three horizontal portion rings 58, 60, 62 extending on the outer surface of the vertical central hollow body portion 16, each of the horizontal portion ring 58, 60, 62 joining two consecutive lateral body portions 24, 25, 26. The horizontal portion rings 58, 60, 62 are outer edges of the protection cover 14, made in one piece with the protection cover.

Additionally (not represented), the lateral body portions 24, 25, 26 may comprise extra outer gripping means in addition with the outer gripping means 50 arranged on the outer surface of the vertical central hollow body portion 16. Alternatively, the outer gripping means 50 may only be arranged on the outer surface of the lateral body portions 24, 25, 26.

As such, a disassembly method of the protection cover 14 to the metallic anchor clamp 10 assembled with the fastening retainer 12 of vehicle cable tie, while being attached with cable tie to the vehicle harness, comprises a single operation of holding the protection cover 14 by the gripping means 50 and removing said protection cover by vertically separating the protection cover 14 from the assembly of the metallic anchor clamp 10 with the fastening retainer 12 of vehicle cable tie. The vertical separation is executed by pulling the protection cover 14 in a first vertical direction d1 opposite to a second vertical direction d2 for pulling the fastening retainer 12 of vehicle cable tie attached with the metallic anchor clamp 10.

## Claims

1. Assembly of a protection cover (14) and a metallic anchor clamp (10) of a fastening retainer (12) of a vehicle cable tie, the cover (14) comprising
a vertical central hollow body portion (16), extending along a vertical axis (V) from a top extremity (18) to a bottom extremity (20), provided for vertically inserting a body part (28) of the metallic anchor clamp (10); said central hollow body portion (16) comprising retention means (34, 36) configured to provide a retention force (Fr) onto the body part (28) of the metallic anchor clamp (10); and
at least two lateral hollow body portions (24, 25) peripherally distributed around the vertical central hollow body portion (16), each lateral hollow body portion (16) comprising anchoring hooks (30, 32) guiding means (40, 42) provided for insertion and arrangement of anchoring hooks (30, 32) of the metallic anchor clamp (10) inside the lateral hollow body portions (24, 25).

2. Assembly according to the preceding claim **characterized in that** the anchoring hooks (30, 32) guiding means (40, 42) comprise vertical elongated opening jointly arranged with the vertical central hollow body portion (16) and extending from the top extremity (18) of the central hollow body portion (16) to a bottom end.

3. Assembly according to any one of the preceding claims **characterized in that** the retention means (34, 36) comprises vertical retention walls of the vertical central hollow body portion (16) configured to provide a retention contact force (Fr) onto the body part (28) of the metallic anchor clamp (10).

4. Assembly according to claim 3 **characterized in** the inner surface of each vertical retention wall comprises at least two distant parallel vertical ribs (46, 48) defining retention surface area of the vertical retention wall between said two vertical ribs (46, 48).

5. Assembly according to any one of the preceding claims **characterized in that** retention means (34, 36) and guiding means (40, 42) are alternatively regularly peripherally arranged around the vertical central hollow body (16).

6. Assembly according to any one of the preceding claims **characterized in that** the vertical central hollow body (16) comprises a circumferential cylindrical vertical central blind hole wherein the at least two lateral hollow body portions (24, 25) are circumferentially distributed around the vertical central hollow body portion (16).

7. Assembly according to claim 6 **characterized in that** each lateral hollow body portion (24, 25) comprises lateral circumferential cylindrical blind hole provided for arranging anchoring hooks (30, 32) of the metallic anchor clamp (10).

8. Assembly according to any one of the preceding claims characterized the protection cover (14) comprises outer gripping means (50) provided for manually holding the protection cover (14) during disassembling of the protection cover (14) to the metallic anchor clamp (10) assembled with the fastening retainer (12) of vehicle cable tie.

9. Assembly according the preceding claim **characterized in that** the outer gripping means (50) are arranged on the vertical central hollow body portion (16).

10. Assembly according to any one of the claims 8 or 9 **characterized in that** at least one of the lateral hollow body portions (24, 25) comprises the outer gripping means (50).

11. Assembly according to any one of the claims 8 to 10 **characterized in that** said outer gripping (50) means comprises at least one horizontal outer edge.

12. Assembly according to claim 8 **characterized in that** said outer gripping means (50) comprise at least one horizontal portion ring (58) extending on the outer surface of the vertical central hollow body portion (16) and joining two consecutive lateral body portions (24, 25).

13. Assembly according to any one of the preceding claims **characterized in that** the protection cover (14) is made of a one plastic piece.

14. Assembly (56) according of any one of the preceding claims, wherein
the anchoring hooks (30, 32) are peripherally distrusted around the body part (28) of the metallic anchor clamp (10),
the body part (28) of the metallic anchor clamp (10) is arranged compressed by the retention means (34, 36) within the vertical central hollow body portion (16); and
the anchoring hooks (30, 32) of the metallic anchor clamp (10) are arranged within the lateral body portions (24, 25).

15. Assembly (56) of claim 14 **characterized in that** the assembly (56) further comprises a fastening retainer (12) of a vehicle cable tie inserted inside the body part (28) of the metallic anchor clamp (10).

## Patentansprüche

1. Baugruppe mit einer Schutzabdeckung (14) und einer metallischen Ankerklammer (10) eines Befestigungshalters (12) eines Fahrzeugkabelbinders, wobei die Abdeckung (14) umfasst
einen Körperabschnitt (16) mit einem vertikalen zentralen Hohlraum, der sich entlang einer vertikalen Achse (V) von einem oberen Ende (18) zu einem unteren Ende (20) erstreckt und zum vertikalen Einsetzen eines Körperteils (28) der metallischen Ankerklammer (10) vorgesehen ist; wobei der Körperabschnitt (16) mit einem zentralen Hohlraum ein Haltemittel (34, 36) umfasst, das so konfiguriert ist, dass es eine Haltekraft (Fr) auf den Körperteil (28) der metallischen Ankerklammer (10) ausübt; und
mindestens zwei Körperabschnitte (24, 25) mit einem seitlichen Hohlraum, die in Umfangsrichtung um den Körperabschnitt (16) mit einem vertikalen zentralen Hohlraum herum verteilt sind, wobei jeder Körperabschnitt (24, 25) mit einem seitlichen Hohlraum Führungsmittel (40, 42) für Verankerungshaken (30, 32) umfasst, die zum Einsetzen und Anordnen von Verankerungshaken (30, 32) der metallischen Ankerklammer (10) innerhalb der Körperabschnitte (24, 25) mit einem seitlichen Hohlraum vorgesehen sind.

2. Baugruppe nach dem vorhergehenden Anspruch, **dadurch gekennzeichnet, dass** die Führungsmittel (40, 42) für Verankerungshaken (30, 32) eine vertikale, längliche Öffnung aufweisen, die gemeinsam mit dem Körperabschnitt (16) mit einem vertikalen zentralen Hohlraum angeordnet ist und sich vom oberen Ende (18) des Körperabschnitts (16) mit einem zentralen Hohlraum zu einem unteren Ende erstreckt.

3. Baugruppe nach einem der vorhergehenden Ansprüche, **dadurch gekennzeichnet, dass** das Haltemittel (34, 36) vertikale Haltewände des Körperabschnitts (16) mit einem vertikalen zentralen Hohlraum umfasst, die so konfiguriert sind, dass sie eine Haltekontaktkraft (Fr) auf den Körperteil (28) der metallischen Ankerklammer (10) ausüben.

4. Baugruppe nach Anspruch 3, **dadurch gekennzeichnet, dass** die Innenfläche jeder vertikalen Haltewand mindestens zwei voneinander beabstandete parallele vertikale Rippen (46, 48) aufweist, die einen Halteflächenbereich der vertikalen Haltewand zwischen den beiden vertikalen Rippen (46, 48) definieren.

5. Baugruppe nach einem der vorhergehenden Ansprüche, **dadurch gekennzeichnet, dass** Haltemittel (34, 36) und Führungsmittel (40, 42) abwechselnd regelmäßig in Umfangsrichtung um den Körper (16) mit einem vertikalen zentralen Hohlraum herum angeordnet sind.

6. Baugruppe nach einem der vorhergehenden Ansprüche, **dadurch gekennzeichnet, dass** der Körper (16) mit einem vertikalen zentralen Hohlraum ein umlaufendes zylindrisches vertikales zentrales Sackloch aufweist, wobei die mindestens zwei Körperabschnitte (24, 25) mit einem seitlichen Hohlraum in Umfangsrichtung um den Körperabschnitt (16) mit einem vertikalen zentralen Hohlraum herum verteilt sind.

7. Baugruppe nach Anspruch 6, **dadurch gekennzeichnet, dass** jeder Körperabschnitt (24, 25) mit einem seitlichen Hohlraum ein seitliches umlaufendes zylindrisches Sackloch aufweist, das zur Anordnung von Verankerungshaken (30, 32) der metallischen Ankerklammer (10) vorgesehen ist.

8. Baugruppe nach einem der vorhergehenden Ansprüche, **dadurch gekennzeichnet, dass** die Schutzabdeckung (14) äußere Greifmittel (50) umfasst, die zum manuellen Halten der Schutzabdeckung (14) während der Demontage der Schutzabdeckung (14) von der metallischen Ankerklammer (10) vorgesehen sind, die mit dem Befestigungshalter (12) des Fahrzeugkabelbinders zusammengebaut ist.

9. Baugruppe nach dem vorhergehenden Anspruch, **dadurch gekennzeichnet, dass** die äußeren Greifmittel (50) an dem Körperabschnitt (16) mit einem vertikalen zentralen Hohlraum angeordnet sind.

10. Baugruppe nach einem der Ansprüche 8 oder 9, **dadurch gekennzeichnet, dass** mindestens einer der Körperabschnitte (24, 25) mit einem seitlichen Hohlraum die äußeren Greifmittel (50) umfasst.

11. Baugruppe nach einem der Ansprüche 8 bis 10, **dadurch gekennzeichnet, dass** das äußere Greifmittel (50) mindestens eine horizontale Außenkante aufweist.

12. Baugruppe nach Anspruch 8, **dadurch gekennzeichnet, dass** die äußeren Greifmittel (50) mindestens einen horizontalen Teilring (58) umfassen, der sich auf der Außenfläche des Körperabschnitts (16) mit einem vertikalen zentralen Hohlraum erstreckt und zwei aufeinanderfolgende Körperabschnitte (24, 25) mit einem seitlichen Hohlraum verbindet.

13. Baugruppe nach einem der vorhergehenden Ansprüche, **dadurch gekennzeichnet, dass** die Schutzabdeckung (14) aus einem einzigen Kunststoffteil besteht.

14. Baugruppe (56) nach einem der vorhergehenden Ansprüche, wobei die Verankerungshaken (30, 32) in Umfangsrichtung um den Körperteil (28) der metallischen Ankerklammer (10) herum verteilt sind,
der Körperteil (28) der metallischen Ankerklammer (10) durch die Haltemittel (34, 36) innerhalb des Körperabschnitts (16) mit einem vertikalen zentralen Hohlraum zusammengedrückt angeordnet ist; und
die Verankerungshaken (30, 32) der metallischen Ankerklammer (10) innerhalb der Körperabschnitte (24, 25) mit einem seitlichen Hohlraum angeordnet sind.

15. Baugruppe (56) nach Anspruch 14, **dadurch gekennzeichnet, dass** die Baugruppe (56) ferner einen Befestigungshalter (12) eines Fahrzeugkabelbinders umfasst, der in das Innere des Körperteils (28) der metallischen Ankerklammer (10) eingesetzt ist.

## Revendications

1. Assemblage d'une couverture de protection (14) et d'une pince d'ancrage métallique (10) d'un élément de maintien pour fixation (12) d'une attache de câbles de véhicule, la couverture (14) comprenant
une portion formant corps creux central vertical (16), s'étendant le long d'un axe vertical (V) depuis une extrémité de sommet (18) jusqu'à une extrémité de fond (20), prévue pour insérer verticalement une partie formant corps (28) d'une pince d'ancrage métallique (10) ; ladite portion formant corps creux central (16) comprenant un moyen de retenue (34, 36) configuré pour appliquer une force de retenue (Fr) jusque sur la partie formant corps (28) de la pince d'ancrage métallique (10) ; et
au moins deux portions formant corps creux latéraux (24, 25) distribuées de manière périphérique autour de la portion formant corps creux central vertical (16), chaque portion formant corps creux latéral (16) comprenant un moyen de guidage (40, 42) de crochets d'ancrage (30, 32) prévu pour une insertion et un agencement de crochets d'ancrage (30, 32) de la pince d'ancrage métallique (10) à l'intérieur des portions formant corps creux latéraux (24, 25).

2. Assemblage selon la revendication précédente, **caractérisé en ce que** le moyen de guidage (40, 42) de crochets d'ancrage (30, 32) comprend une ouverture allongée verticale agencée conjointement avec la portion formant corps creux central vertical (16) et s'étendant depuis l'extrémité de sommet (18) de la portion formant corps creux central (16) jusqu'à une extrémité de fond.

3. Assemblage selon l'une quelconque des revendications précédentes, **caractérisé en ce que** le moyen de retenue (34, 36) comprend des parois de retenue verticales de la portion formant corps creux central vertical (16) configurées pour appliquer une force de contact de retenue (Fr) jusque sur la partie formant corps (28) de la pince d'ancrage métallique (10).

4. Assemblage selon la revendication 3, **caractérisé en ce que** la surface intérieure de chaque paroi de retenue verticale comprend au moins deux nervures verticales parallèles distantes (46, 48) définissant une aire de surface de retenue de la paroi de retenue verticale entre lesdites deux nervures verticales (46, 48).

5. Assemblage selon l'une quelconque des revendications précédentes, **caractérisé en ce que** les moyens de retenue (34, 36) et les moyens de guidage (40, 42) sont agencés de manière périphérique régulièrement en alternance autour du corps creux central vertical (16).

6. Assemblage selon l'une quelconque des revendications précédentes, **caractérisé en ce que** le corps creux central vertical (16) comprend un trou borgne central vertical cylindrique circonférentiel dans lequel lesdites au moins deux portions formant corps creux latéraux (24, 25) sont distribuées circonférentiellement autour de la portion formant corps creux central vertical (16).

7. Assemblage selon la revendication 6, **caractérisé en ce que** chaque portion formant corps creux latéral (24, 25) comprend un trou borgne cylindrique circonférentiel latéral prévu pour agencer des crochets d'ancrage (30, 32) de la pince d'ancrage métallique (10).

8. Assemblage selon l'une quelconque des revendications précédentes, **caractérisé en ce que** la couverture de protection (14) comprend un moyen de préhension extérieur (50) prévu pour tenir manuellement la couverture de protection (14) pendant un désassemblage de la couverture de protection (14) sur la pince d'ancrage métallique (10) assemblée avec l'élément de maintien pour fixation (12) de l'attache de câbles de véhicule.

9. Assemblage selon la revendication précédente, **caractérisé en ce que** le moyen de préhension extérieur (50) est agencé sur la portion formant corps creux central vertical (16).

10. Assemblage selon l'une quelconque des revendications 8 ou 9, **caractérisé en ce que** l'une au moins des portions formant corps creux latéraux (24, 25) comprend le moyen de préhension extérieur (50).

11. Assemblage selon l'une quelconque des revendications 8 à 10, **caractérisé en ce que** ledit moyen de préhension extérieur (50) comprend au moins un bord extérieur horizontal.

12. Assemblage selon la revendication 8, **caractérisé en ce que** ledit moyen de préhension extérieur (50) comprend au moins une bague à portion horizontale (58) s'étendant sur la surface extérieure de la portion formant corps creux central vertical (16) et joignant deux portions formant corps latéraux (24, 25) consécutives.

13. Assemblage selon l'une quelconque des revendications précédentes, **caractérisé en ce que** la couverture de protection (14) est faite en une pièce en matière plastique.

14. Assemblage (56) selon l'une quelconque des revendications précédentes, dans lequel
les crochets d'ancrage (30, 32) sont déployés de manière périphérique autour de la partie formant corps (28) de la pince d'ancrage métallique (10),
la partie formant corps (28) de la pince d'ancrage métallique (10) est agencée en étant comprimée par le moyen de retenue (34, 36) à l'intérieur de la portion formant corps creux central vertical (16) ; et
les crochets d'ancrage (30, 32) de la pince d'ancrage métallique (10) sont agencées à l'intérieur des portions formant corps latéraux (24, 25).

15. Assemblage (56) selon la revendication 14, **caractérisé en ce que** l'assemblage (56) comprend en outre un élément de maintien de fixation (12) d'une attache de câbles de véhicule inséré à l'intérieur de la partie formant corps (28) de la pince d'ancrage métallique (10).
